# EUROPEAN PATENT APPLICATION

(11) **EP 4 280 354 A1**
(43) Date of publication of application: **22.11.2023**
(21) Application number: 21965191.6
(22) Date of filing: 26.11.2021
(51) Int. Cl.: H01M 50/20

(54) **BATTERY CASE, BATTERY, ELECTRIC DEVICE, AND METHOD AND DEVICE FOR PREPARING BATTERY**

(71) Applicant: Contemporary Amperex Technology Co., Limited, Ningde, Fujian 352100 (CN)
(72) Inventor: KE, Qingpeng, Ningde, Fujian 352100 (CN); PAN, Xin, Ningde, Fujian 352100 (CN); CHEN, Zhiming, Ningde, Fujian 352100 (CN)
(74) Representative: Ziebig Hengelhaupt Intellectual Property Attorneys Patentanwaltskanzlei PartGmbB
(86) International application number: PCT/CN2021/133554
(87) International publication number: WO 2023/092457

(57) **Abstract**

A box body for a battery, a battery, a power consumption apparatus, a method and apparatus for preparing the battery are provided in the present application, which can improve the mounting stability of the battery in the power consumption apparatus. The box body (100) includes: a first partial box body (110), provided with a first hole (111); a mounting structural member (130), located in the box body (100) and arranged corresponding to the first hole (111), where the mounting structural member (130) is used for mounting the box body (100) to a power consumption apparatus through the first hole (111); where an edge of the first hole (111) is provided with a rigid structural member (140), and the rigid structural member (140) abuts against the mounting structural member (130) to prevent the mounting structural member (130) from contacting the first partial box body (110). Through this solution, the rigid structural member can prevent the first partial box body from being worn by the mounting structural member, so as to guarantee the rigidity and strength of the first partial box body, to prevent the movement of vehicles and other power consumption apparatus from affecting the first partial box body, and to improve the mounting stability of the box body and the battery in the power consumption apparatus.

## Description

### TECHNICAL FIELD

Embodiments of the present application relates the technical field of batteries, and in particular, to a box body for a battery, a battery, a power consumption apparatus, and a method and apparatus for preparing battery.

### BACKGROUND

Energy saving and emission reduction are the key to the sustainable development of the automotive industry. In this case, electric vehicles have become an important part of the sustainable development of the automotive industry due to their advantages of energy conservation and environmental protection. For electric vehicles, the battery technology is also an important factor for their development.

When a battery is mounted on an electric device, such as an electric vehicle, the movement of the vehicle will cause the battery jolted, and excessive jolt of the battery will have an adverse effect on the performance of the battery. Therefore, how to improve the stability of the battery fixed to a power consumption apparatus is a to-be-solved technical problem in the battery technology.

### SUMMARY

A box body for a battery, a battery, a power consumption apparatus, a method and apparatus for preparing the battery are provided in the present application, which can improve the mounting stability of the battery in the power consumption apparatus.

In a first aspect, a box body for a battery is provided, including: a first partial box body, provided with a first hole; a mounting structural member, located in the box body and arranged corresponding to the first hole, where the mounting structural member is used for mounting the box body to a power consumption apparatus through the first hole; where an edge of the first hole is provided with a rigid structural member, and the rigid structural member abuts against the mounting structural member to prevent the mounting structural member from contacting the first partial box body.

Through the technical solution of the present embodiment of the present application, the box body is provided with a mounting structural member, and the mounting structural member is arranged corresponding to a first hole in the first partial box body, and the box body can be mounted to a power consumption apparatus through the first hole. On such basis, an edge of the first hole is also provided with a rigid structural member, and the rigid structural member abuts against the mounting structural member, which can prevent the mounting structural member from wearing the position at the edge of the first hole in the first partial box body, thus preventing problems such as the rigidity and strength reduction of the first partial box body caused by the wearing. By ensuring the rigidity and strength of the first partial box body, it is possible to prevent the movement of vehicles and other power consumption apparatus from affecting the first partial box body, thus improving the mounting stability of the box body and the battery in the power consumption apparatus, which is conducive to improving the safety performance and comprehensive performance of the battery and convenient for the promotion and use of batteries in power consumption apparatus.

In some possible implementations, the rigid structural member and the first partial box body abut against each other through a first sealing member to guarantee the sealing between the rigid structural member and the first partial box body.

Through the technical solution of the present implementation, the first sealing member abuts between the rigid structural member and the first partial box body to ensure the sealing between the rigid structural member and the first partial box body, thereby improving the overall sealing of the box body and improving the safety performance of electrical components such as battery cells inside the box body.

In some possible implementations, the rigid structural member and the mounting structural member abut against each other through a second sealing member to guarantee the sealing between the rigid structural member and the mounting structural member.

Through the technical solution of second present implementation, the second sealing member abuts between the rigid structural member and the mounting structural member to ensure the sealing between the rigid structural member and the mounting structural member, thereby improving the overall sealing of the box body and improving the safety performance of electrical components such as battery cells inside the box body.

In some possible implementations, the box body further includes: a fixing member, located outside the box body and connected to the mounting structural member through the first hole, and the fixing member is used for fixing the first partial box body and the rigid structural member to the mounting structural member.

Through the technical solution of the implementation, the first partial box body and the rigid structural member are fixed to the mounting structural member by using the fixing member, so that the reliable and firm interconnection between the first partial box body, the rigid structural member and the mounting structural member can be realized, thus further improving the mounting stability of the box body and the battery in the power consumption apparatus.

In some possible implementations, the rigid structural member abuts against the fixing member to prevent the fixing member from contacting the first partial box body.

Through the technical solution of the implementation, the rigid structural member, in addition to abutting against the mounting structural member, also abuts against the fixing member to prevent the fixing member from contacting the first partial box body, thus preventing the fixing member from wearing the first partial box body, which further ensures the rigidity and strength of the first partial box body and improves the mounting stability of the box body and the battery in the power consumption apparatus.

In some possible implementations, the rigid structural member covers a side wall of the first hole and surfaces that locate at edges of the first partial box body at the first hole and face an inner portion and an outer portion of the box body.

Through the technical solution of the implementation, the rigid structural member can not only prevent the mounting structural member and the fixing member located on the inner and outer surfaces of the first partial box body from wearing the first partial box body, but also ensure the rigidity and strength of the first partial box body. Meanwhile, the rigid structural member also covers the side wall of the first hole, that is, it is arranged between the fixing member and the mounting structural member, which can provide a rigid connection between the fixing member and the mounting structural member to bear the tightening force between the fixing member and the mounting structural member so as to ensure that there will be no looseness between the fixing member and the mounting structural member. Through the arrangement of the rigid structural member in the implementation, the interconnection between the first partial box body, the rigid structural member and the mounting structural member can be made more stable, thereby improving the mounting stability of the box body mounted to the power consumption apparatus through the mounting structural member.

In some possible implementations, the rigid structural member includes a first rigid sleeve and a second rigid sleeve, the first rigid sleeve includes a first tubular structure and a first flange structure, the first tubular structure is located on the side wall of the first hole, the first flange structure covers a surface that locates at the edge of the first partial box body at the first hole and faces the inner portion of the box body; and the second rigid sleeve includes a second tubular structure and a second flange structure, the second tubular structure is located at the side wall of the first hole and is mated and connected to the first tubular structure, and the second flange structure covers a surface that locates at the edge of the first partial box body at the first hole and faces the outer portion of the box body.

Through the technical solution of the implementation, the rigid structural member can be composed of two rigid sleeves, and the two rigid sleeves are provided to be able to be connected to each other, so as to facilitate the mounting of the rigid structural member at the edge of the first hole in the first partial box body.

In some possible implementations, the second tubular structure covers at least part of the side wall of the first hole, and the first tubular structure covers at least part of the second tubular structure.

Through the technical solution of the implementation, on the basis of realizing that the first tubular structure and the second tubular structure are connected to each other and arranged on the side wall of the first hole, compared with the second tubular structure, the first tubular structure is provided farther away from the side wall of the first hole, and the length of the first flange structure connected to the first tubular structure in the radial direction is longer, so that the area of the first flange structure and the connection area between the first flange structure and the mounting structural member can be increased, thus ensuring the reliability of the connection between the first rigid sleeve and the mounting structural member. In addition, in the present implementation, the second sealing member can be conveniently provided between the first flange structure and the mounting structural member, and the contact area of the second sealing member between the first flange structure and the mounting structural member can also be increased, thus improving the sealing performance of the second sealing member between the first flange structure and the mounting structural member. Furthermore, in the present implementation, firstly, the first rigid sleeve can be provided on the first hole, where the first tubular structure can cover at least part of the side wall of the first hole, and then, the second rigid sleeve is interconnected with the first rigid sleeve, and the mounting process between the two is relatively simple, and can fit well with the first hole.

In some possible implementations, the first tubular structure and the second tubular structure are mated and connected to each other through threads.

Through the technical solution of the implementation, the way of connection between the first tubular structure and the second tubular structure is simple and easy to implement, and can ensure a stable and reliable connection between the first rigid sleeve and the second rigid sleeve.

In some possible implementations, the first flange structure and the first partial box body abut against each other through the first sealing member, the width of the first sealing member substantially covers the width of the first flange structure, and/or, the thickness of the first sealing member ranges from 0.2 mm to 0.3mm.

Through the technical solution of the implementation, the width of the first sealing member basically covers the width of the first flange structure, and the space of the first flange structure can be used to a large extent to arrange enough first sealing members to realize more reliable sealing and connection between the first flange structure and the first partial box body. In addition, the thickness of the first sealing member may range between 0.2mm to 0.3mm, so that the first sealing member can have better mechanical properties, so as to ensure and optimize the reliable connection between the first rigid sleeve and the first partial box body.

In some possible implementations, the first flange structure is provided with a spacing step for accommodating the first sealing member.

Through the technical solution of the implementation, a spacing step is provided on the first flange structure of the first rigid sleeve, so as to control the size of the first sealing member accommodated in the spacing step. The implementation is relatively simple and easy to implement, and can also enable the first sealing member to have good performance, thus improving the overall manufacturing efficiency and performance of the box body.

In some possible implementations, the first sealing member is a structural adhesive.

Through the technical solution of the implementation, in the case that the first sealing member is structural adhesive, the first sealing member can not only ensure the sealing between the first rigid sleeve and the first partial box body, but also realize the reliable connection between the first rigid sleeve and the first partial box body to further improve the reliability of the box body as a whole. Meanwhile, the structural adhesive is also convenient to be coated on the first rigid sleeve or the first partial box body, and the process is relatively simple, which is conducive to improving the manufacturing efficiency of the box body and the battery.

In some possible implementations, a filling layer is provided between the second flange structure and the surface that locates at the edge of the first partial box body at the first hole and faces the outer portion of the box body.

Through the technical solution of the implementation, the filling layer can firstly be used for absorbing the manufacturing tolerances of the first rigid sleeve, the second rigid sleeve and the first partial box body, so as to avoid the gap formed between the first rigid sleeve, the second rigid sleeve and the first partial box body due to the influence of the manufacturing process, thereby improving the overall sealing performance of the box body and other related performances.

In some possible implementations, the shapes of the first flange structure and the second flange structure are polygons.

Through the technical solution of the implementation, the polygonal first flange structure and the second flange structure can provide a locking structure for the mounting tool for the first rigid sleeve and the second rigid sleeve, so that the mounting tool can be locked on the first flange structure and the second flange structure, and realize the interconnection and mounting between the first rigid sleeve and the second rigid sleeve.

In some possible embodiments, the shape of the first flange structure is different from the shape of the second flange structure.

Through the technical solution of the implementation, the shape of the first flange structure is different from the shape of the second flange structure, which can play a role in error prevention, that is, the first rigid sleeve and the second rigid sleeve can be distinguished by the shape of the first flange structure and the second flange structure, which is conducive to facilitating the correct mounting of the first rigid sleeve and the second rigid sleeve on the first partial box body.

In some possible implementations, the first hole is located in a middle region of the first partial box body.

According to the technical solution of the present implementation, the first hole is located in the middle region of the first partial box body. Correspondingly, in the present implementation, the rigid structural member and the mounting structural member are also correspondingly located in the middle region of the box body. The mounting structural member and the rigid structural member located in the middle region of the box body can be used to mount the box body and the battery located therein to the power consumption apparatus in a more balanced and stable manner.

In some possible implementations, the first partial box body is made of a composite material, and the rigid structural member is made of a metal material.

Through the technical solution of the implementation, the first partial box body is made of composite material, which has the characteristics of light weight and relatively high strength. While ensuring the box body has a certain strength and reliability, the overall quality of the box body can be reduced, to facilitate the mounting and replacement of the battery in the power consumption apparatus. In addition, the rigid structural member is a metal material, which has stronger wearing resistance compared to the first partial box body, and has certain rigidity and strength. Therefore, metal materials can be suitably used as the rigid structural member in the embodiments of the present application, so as to improve the mounting stability of the box body and the battery in the power consumption apparatus.

In some possible implementations, the box body further includes a second partial box body and a beam, the second partial box body and the first partial box body are interlocked to form an accommodating chamber for accommodating a battery cell, and the beam is provided in the second partial box body, and the mounting structure member is arranged on the beam.

Through the technical solution of the implementation, the beam in the second partial box body is used to provide the mounting structural member. On the one hand, other spaces in the box body for accommodating battery cells will not be occupied, and the energy density of the battery will be improved; and on the other hand, the mounting stability of the beam in the box body is relatively high. Therefore, arranging the mounting structural member on the beam can also improve the mounting stability of the mounting structural member in the box body.

In a second aspect, a battery is provided, including: at least one battery cell, and the box body in the first aspect or any possible implementations of the first aspect, where the box body is used for accommodating the at least one battery cell.

In a third aspect, a power consumption apparatus is provided, including: the battery in the second aspect, where the battery is used for providing electric energy to the power consumption apparatus.

In a fourth aspect, a method for preparing a battery is provided, including: providing at least one battery cell; providing a box body, the box body including: a first partial box body, provided with a first hole; a mounting structural member, located in the box body and arranged corresponding to the first hole, where the mounting structural member is used for mounting the box body to a power consumption apparatus through the first hole; where an edge of the first hole is provided with a rigid structural member, and the rigid structural member abuts against the mounting structural member to prevent the mounting structural member from contacting the first partial box body; and accommodating the at least one battery cell in the box body.

In a fifth aspect, an apparatus for preparing a battery is provided, including: a provision module, used for providing at least one battery cell and a box body; where the box body includes: a first partial box body, provided with a first hole; a mounting structural member, located in the box body and arranged corresponding to the first hole, wherein the mounting structural member is used for mounting the box body to a power consumption apparatus through the first hole; where an edge of the first hole is provided with a rigid structural member, and the rigid structural member abuts against the mounting structural member to prevent the mounting structural member from being in contact with the first part of the box body; and a mounting module, used for accommodating the at least one battery cell in the box body.

Through the technical solution of the present embodiment of the present application, the box body is provided with a mounting structural member, and the mounting structural member is arranged corresponding to a first hole in the first partial box body, and the box body can be mounted to a power consumption apparatus through the first hole. On such basis, an edge of the first hole is also provided with a rigid structural member, and the rigid structural member abuts against the mounting structural member, which can prevent the mounting structural member from wearing the position at the edge of the first hole in the first partial box body, thus preventing problems such as the rigidity and strength reduction of the first partial box body caused by the wearing. By improving the rigidity and strength of the first partial box body, it is possible to prevent the movement of vehicles and other power consumption apparatus from affecting the first partial box body, thus improving the mounting stability of the box body and the battery in the power consumption apparatus, which is conducive to improving the safety performance and comprehensive performance of the battery and convenient for the promotion and use of batteries in power consumption apparatus.

### BRIEF DESCRIPTION OF DRAWINGS

To describe the technical solutions in embodiments of the present application more clearly, the following briefly describes the accompanying drawings required for the embodiments. Apparently, the accompanying drawings in the following description show merely some embodiments of the present application, and persons of ordinary skill in the art may still derive other drawings from these accompanying drawings without creative efforts.
FIG. 1 is a schematic structural diagram of a vehicle disclosed in an embodiment of present application;
FIG. 2 is a schematic structural diagram of a battery disclosed in an embodiment of the present application;
FIG. 3 is a schematic structural diagram of a battery cell disclosed in an embodiment of the present application;
FIG. 4 is a schematic exploded stereogram of a box body disclosed in an embodiment of the present application;
FIG. 5 is a schematic sectional diagram taken along A-A in FIG. 4;
FIG. 6 is a schematic sectional diagram of another box body disclosed in an embodiment of the present application;
FIG. 7 is a schematic sectional diagram of another box body disclosed in an embodiment of the present application;
FIG. 8 is a schematic sectional diagram of another box body disclosed in an embodiment of the present application;
FIG. 9 is a schematic sectional diagram of another box body disclosed in an embodiment of the present application;
FIG. 10 is a schematic sectional diagram of another box body disclosed in an embodiment of the present application;
FIG. 11 is a schematic stereogram of a first rigid sleeve and a second rigid sleeve disclosed in an embodiment of the present application;
FIG. 12 is a schematic structural stereogram of a box body disclosed in an embodiment of the present application;
FIG. 13 is a schematic exploded stereogram of the box body in the embodiment of shown in FIG. 12;
FIG. 14 is a schematic flowchart of a method producing a battery disclosed in an embodiment of the present application; and
FIG. 15 is a schematic block diagram of an apparatus producing a battery disclosed in an embodiment of the present application.

In the drawings, the drawings are not drawn to actual scale.

### DESCRIPTION OF EMBODIMENTS

Implementations of the present application will be further described below in detail with reference to the accompanying drawings and embodiments. The detailed description of the following embodiments and the accompanying drawings are used to exemplarily illustrate principles of the present application, but cannot be used to limit the scope of the present application, that is, the present application is not limited to the described embodiments.

In the description of the present application, it should be noted that, unless otherwise stated, "a plurality of' means more than two (including two); and orientations or positional relationships indicated by terms such as "up", "down", "left", "right", "inside", and "outside" are merely for convenience of describing the present application and for simplifying the description, rather than for indicating or implying that an indicated apparatus or element must have a specific orientation, and must be constructed and operated in a specific orientation, which thus may not be understood as limitations to the present application. In addition, the terms "first", "second", and "third" are merely used for a purpose of description, and shall not be understood as an indication or implication of relative importance. "Vertical" is not strictly vertical, but within an allowable range of error. "Parallel" is not strictly parallel, but within an allowable range of error.

The orientation words appearing in the following description are all directions shown in the drawings, and do not limit the specific structure of the present application. In the description of the present application, it should be further noted that, unless explicitly specified and defined otherwise, terms "mounting", "interconnection", and "connection" should be understood broadly, for example, they may either be a fixed connection, or a detachable connection, or an integrated connection; and they may either be a direct connection, or an indirect connection through an intermediary. Those of ordinary skill in the art may understand the specific meanings of the foregoing terms in the present application according to specific conditions.

In the present application, the term "and/or" is only an association relation describing associated objects, which means that there may be three relations, for example, A and/or B may represent three situations: A exists, both A and B exist, and B exists. In addition, the character "/" in the present application generally indicates that the associated objects before and after the character are in an "or" relationship.

Unless otherwise defined, all the technical and scientific terms used herein have the same meanings as are commonly understood by those skilled in the art of the present application. Terms used herein in the description of the present application are for the purpose of describing specific embodiments only and are not intended to limit the present application. The terms "including" and "having" and any variations thereof in the description and claims as well as the drawings of the present application are intended to cover a non-exclusive inclusion. The terms "first", "second", etc. in the description and claims or the above drawings of the present application or the above drawings are used to distinguish different objects and are not used to describe a particular order or primary-secondary relationship.

The "embodiment" mentioned in the present application means that special features, structures, or characteristics described in conjunction with the embodiments may be included in at least one embodiment of the present application. The occurrence of "embodiment" in various positions in the description does not necessarily refer to the same embodiment, nor is it a separate or alternative embodiment that is mutually exclusive to other embodiments. It is explicitly and implicitly understood by those skilled in the art that the embodiments described herein may be combined with other embodiments.

In the present application, the battery refers to a physical module including one or more battery cells to provide electric energy. For example, the battery mentioned in the present application may include a battery module or a battery pack. The battery generally includes a box body for packaging one or more battery cells. The box body may prevent liquid or other foreign matters from affecting the charging or discharging of the battery cells.

Optionally, the battery cells may include lithium-ion secondary batteries, lithium-ion primary batteries, lithium-sulfur batteries, sodium/lithium-ion batteries, sodium-ion batteries or magnesium-ion batteries, etc., which are not limited in the embodiments of the present application. The battery cells may be cylindrical, flat, cuboid or in another shape, which is also not limited in the embodiments of the present application. The battery cells are generally divided into three types according to the way of packaging: cylindrical battery cells, prismatic battery cells and pouch battery cells, which are not limited in the embodiments of the present application.

The battery cell includes an electrode assembly and an electrolytic solution, and the electrode assembly is composed of a positive electrode sheet, a negative electrode sheet, and a separator. The operation of the battery cell mainly relies on the movement of metal ions between the positive electrode sheet and the negative electrode sheet. The positive electrode sheet includes a positive electrode current collector and a positive electrode active material layer. The positive electrode active material layer is coated on a surface of the positive electrode current collector, and the current collector not coated with the positive electrode active material layer protrudes from the current collector coated with the positive electrode active material layer and serves as a positive electrode tab. In an example of a lithium-ion battery, the material of the positive electrode current collector may be aluminum, and the positive electrode active material may be lithium cobalt oxides, lithium iron phosphate, ternary lithium, lithium manganate, or the like. The negative electrode sheet includes a negative electrode current collector and a negative electrode active material layer. The negative electrode active material layer is coated on a surface of the negative electrode current collector, and the current collector not coated with the negative electrode active material layer protrudes from the current collector coated with the negative electrode active material layer and serves as a negative electrode tab. The material of the negative electrode current collector may be copper, and the negative active material may be carbon or silicon, etc. In order to ensure that no fusing occurs when a large current passes through, there are a plurality of positive electrode tabs which are stacked together, and there are a plurality of negative electrode tabs which are stacked together. The material of the separator may be polypropylene (PP) or polyethylene (PE), etc. In addition, the electrode assembly may be a coiled structure or a laminated structure, and the embodiments of the present application are not limited thereto.

With the development of the battery technology, it is necessary to consider many design factors, such as energy density, cycle life, discharge capacity, charge-discharge rate and other performance parameters, in addition, safety, stability, and other performances of the battery should also be considered.

After the battery is mounted to the power consumption apparatus, for example, after the battery is mounted to the electric vehicle, the movement of the power consumption apparatus such as the vehicle will cause a certain impact on the battery. If the stability of the battery is unsatisfying, the impact will have an adverse effect on the performance of the battery and may cause safety issues.

As an example, for the fixing of the battery in the electric vehicle, in some implementations, mutually cooperating locking structures may be provided on the box body of the battery and the frame of the electric vehicle, so as to realize the fixing of the battery on the frame.

Alternatively, in other implementations, a mounting structural member may also be provided in the box body of the battery, and through the mounting structural member, the battery can be mounted to the vehicle frame. Optionally, the mounting structural member can be arranged in the inner portion of the box body, and a space can be reserved inside the mounting structural member, so that the bolts and other structural members on the frame can be inserted into the inside of the mounting structural member, thus realizing the mounting of the battery on the vehicle rack.

In the implementation, the mounting structural member needs to abut against the wall of the box body to form a closed space between the mounting structural member and the box body. When the bolts and other structural members on the frame are inserted into the mounting structural member, the sealing of the inner portion of the box body will not be affected, thus ensuring the safety performance of the battery cells provided in the inner portion of the box body.

But meanwhile, during the operation of the electric vehicle, the vibration of the bolts and other structural members on the frame will bring the vibration of the mounting structural members, so that the mounting structural members directly abutting against the wall of the box body will wear the wall of the box body. When the vehicle is running for a long time, on the one hand, the wearing will affect the rigidity and strength of the box body, and then affect the stability of the battery mounted on the frame; on the other hand, the wearing will also affect the sealing of the box body, which in turn affects the safety performance of the battery cells in the inner portion of the box body. Therefore, in the implementation, the mounting stability and sealing performance of the box body of the battery in the vehicle are not high, which may cause certain potential safety hazards.

In view of this, the present application provides a box body for a battery, which includes a rigid structural member in addition to the above-mentioned mounting structural member for mounting the battery to the vehicle. The rigid structural member and the mounting structural member abut against each other, which can prevent the mounting structural member from directly contacting the wall of the box body, thus preventing the mounting structural member from wearing the wall of the box body. Through the implementation, the stability of the battery fixed to the power consumption apparatus can be improved.

The technical solutions described in the embodiments of the present application are all applicable to various apparatuses using batteries, such as mobile phones, portable apparatus, notebook computers, electromobiles, electronic toys, electric tools, electric vehicles, ships and spacecrafts. For example, the spacecrafts include airplanes, rockets, space shuttles, spaceships, etc.

It should be understood that the technical solutions described in the embodiments of the present application are not only applicable to the apparatus described above, but also applicable to all apparatus using batteries. However, for brief description, the following embodiments are all described by an example of an electric vehicle.

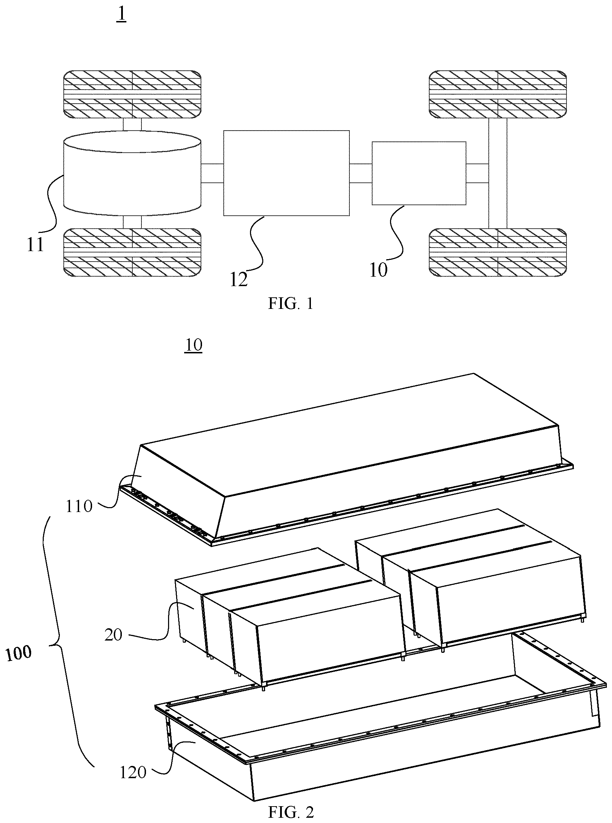

For example, as shown in FIG. 1, FIG. 1 is a schematic structural diagram of a vehicle 1 according to an embodiment of the present application. The vehicle 1 may be a fuel-powered vehicle, a gas-powered vehicle or a new energy vehicle, and the new energy vehicle may be a battery electric vehicle, a hybrid vehicle, an extended-range vehicle, etc. The vehicle 1 may be internally provided with a motor 11, a controller 12 and a battery 10, and the controller 12 is configured to control the battery 10 to supply power to the motor 11. For example, the battery 10 may be provided at the bottom, head or tail of the vehicle 1. The battery 10 may be used for supply power to the vehicle 1. For example, the battery 10 may serve as an operation power source of the vehicle 1 for a circuit system of the vehicle 1, for example, for a working power demand of the vehicle 1 during startup, navigation and running. In another embodiment of the present application, the battery 10 may serve not only as an operation power source of the vehicle 1, but also as a driving power source of the vehicle 1, replacing or partially replacing fuel or natural gas to provide driving power for the vehicle 1.

In order to meet different power requirements, the battery may include a plurality of battery cells, where the plurality of battery cells may be in series connection, parallel connection or series-parallel connection. The series-parallel connection refers to a combination of series connection and parallel connection. The battery may also be called a battery pack. Optionally, the plurality of battery cells may be first connected in series, in parallel or in series and parallel to form battery modules, and then the multiple battery modules are connected in series, in parallel or in series and parallel to form a battery. That is, a plurality of battery cells may directly form a battery, or may first form battery modules, and then the battery modules form a battery.

For example, as shown in FIG. 2, which is a schematic structural diagram of a battery 10 according to an embodiment of the present application, the battery 10 may include a plurality of battery cells 20. The battery 10 may further include a box body (or referred to as a cover body), the inner portion of the box body is a hollow structure, and the plurality of battery cells 20 are accommodated in the box body. As shown in FIG. 2, the box body may include two parts, which are referred to as a first partial box body 110 and a second partial box body 120, respectively, and the first partial box body 110 and the second partial box body 120 are fastened together. The shapes of the first partial box body 110 and the second partial box body 120 may be determined according to the shape of the combined plurality of battery cells 20, and the first partial box body 110 and the second partial box body 120 may each have an opening. For example, the first partial box body 110 and the second partial box body 120 each may be a hollow cuboid and each have only one surface with an opening, and the opening of the first partial box body 110 is provided opposite to the opening of the second partial box body 120. The first partial box body 110 and the second partial box body 120 are fastened to each other to form a box body with a closed chamber. The plurality of battery cells 20 are combined in parallel connection or series connection or series-parallel connection and are then placed in the box body formed by fastening the first partial box body 110 to the second partial box body 120.

Optionally, the battery 10 may also include other structures, which will not be described in detail herein. For example, the battery 10 may also include a busbar component, and the busbar component is configured to implement electric connection between the plurality of battery cells 20, such as parallel connection, series connection or series-parallel connection. Specifically, the busbar component may implement the electrical connection between the battery cells 20 by connecting electrode terminals of the battery cells 20. Further, the busbar component may be fixed to the electrode terminals of the battery cells 20 by means of welding. Electric energy of the plurality of battery cells 20 can be further led out through an electrically conductive mechanism to pass through the box body. Optionally, the conduction mechanisms may also belong to the busbar component.

According to different power requirements, the number of the battery cells 20 may be set to any value. The plurality of battery cells 20 can be connected in series, in parallel or in series and parallel to implement larger capacity or power. Since there may be many battery cells 20 included in each battery 10, the battery cells 20 may be arranged in groups for convenience of mounting, and each group of battery cells 20 constitutes a battery module. The number of battery cells 20 in each group of battery cells 20 is not limited and may be set according to demands.

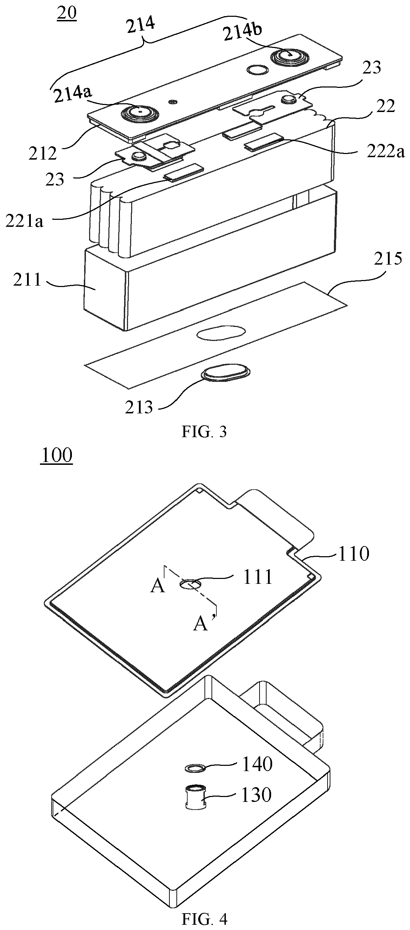

FIG. 3 is a schematic structural diagram of a battery cell 20 in an embodiment of the present application.

As shown in FIG. 3, the battery cell 20 includes one or more electrode assemblies 22, a housing 211 and a cover plate 212. A wall of the housing 211 and the cover plate 212 are each referred to as a wall of the battery cell 20. The housing 211 is shaped according to a shape of the one or more electrode assemblies 22 after combination. For example, the housing 211 may be a hollow cuboid or cube or cylinder, and one surface of the housing 211 has an opening, so that the one or more electrode assemblies 22 may be placed in the housing 211. For example, when the housing 211 is a hollow cuboid or cube, one plane of the housing 211 is an opening surface, that is, the plane does not have a wall, so that the inside and outside of the housing 211 are in communication with each other. When the housing 211 is a hollow cylinder, an end face of the housing 211 is an opening face, that is, the end face does not have a wall, so that the inside and outside of the housing 211 are in communication with each other. The cover plate 212 covers the opening and is connected to the housing 211 to form a closed cavity in which the electrode assembly 22 is placed. The housing 211 is filled with an electrolyte, such as an electrolytic solution.

The battery cell 20 may further include two electrode terminals 214, and the two electrode terminals 214 may be disposed on the cover plate 212. The cover plate 212 is generally in a shape of a flat plate, and the two electrode terminals 214 are fixed on a flat plate face of the cover plate 212. The two electrode terminals 214 are a positive electrode terminal 214a and a negative electrode terminal 214b, respectively. Each electrode terminal 214 is correspondingly provided with a connection member 23 also called a current collecting member 23, which is located between the cover plate 212 and the electrode assembly 22 and configured to electrically connect the electrode assembly 22 to the electrode terminal 214.

As shown in FIG. 3, each of the electrode assembles 22 is provided with a first electrode tab 221a and a second electrode tab 222a. The first electrode tab 221a and the second electrode tab 222a have opposite polarities. For example, when the first electrode tab 221a is a positive electrode tab, the second electrode tab 222a is a negative electrode tab. The first electrode tab 221a of the one or more electrode assemblies 22 is connected to one electrode terminal through one connecting member 23, and the second electrode tab 222a of the one or more electrode assemblies 22 is connected to the other electrode terminal through the other connecting member 23. For example, the positive electrode terminal 214a is connected to the positive electrode tab through one connecting member 23, and the negative electrode terminal 214b is connected to the negative electrode tab through the other connecting member 23.

In the battery cell 20, according to actual use demands, there may be a single electrode assembly 22 or a plurality of electrode assemblies 22. As shown in FIG. 3, four separate electrode assemblies 22 are disposed in the battery cell 20.

As an example, a pressure relief mechanism 213 may also be provided on one of the walls of the battery cell 20. The pressure relief mechanism 213 is used to be actuated when an internal pressure or temperature of the battery cell 20 reaches a threshold, to relieve the internal pressure or temperature.

Optionally, in one embodiment of the present application, the pressure relief mechanism 213 and the electrode terminal 214 are disposed on different walls of the battery cell 20. As an example, as shown in FIG. 3, the electrode terminal 214 of the battery cell 20 may be disposed on the top wall of the battery cell 20, that is, the cover plate 212. The pressure relief mechanism 213 is disposed on another wall of the battery cell 20 that is different from the top wall, for example, the pressure relief mechanism 213 is disposed on the bottom wall 215 opposite to the top wall. For ease of illustration, the bottom wall 215 is separated from the housing 211 in FIG. 3, but this does not limit the bottom side of the housing 211 to have an opening.

Optionally, in another embodiment of the present application, the pressure relief mechanism 213 and the electrode terminal 214 are disposed on the same wall of the battery cell 20. For example, both the electrode terminal 214 and the pressure relief mechanism 213 can be disposed on the top wall of the battery cell 20, that is, the cover plate 212.

The above-mentioned pressure relief mechanism 213 may be a part of the wall where it is located, or may be a separate structure from the wall where it is located, and be fixed on the wall where it is located by, for example, welding. For example, in the embodiment shown in FIG. 3, when the pressure relief mechanism 213 is a part of the bottom wall 215, for example, the pressure relief mechanism 213 may be formed by providing an indentation on the bottom wall 215, and the thickness of the bottom wall 215 corresponding to the indentation is less than the thicknesses of the regions of the pressure relief mechanism 213 other than the indentation. The indentation is the weakest position of the pressure relief mechanism 213. When excessive gas generated by the battery cell 20 causes an internal pressure of the housing 211 to rise and reach a threshold, or heat generated by the internal reaction of the battery cell 20 causes an internal temperature of the battery cell 20 to rise and reach a threshold, the pressure relief mechanism 213 may be fractured at the indentation, resulting in the communication between the inside and outside of the housing 211. The gas pressure and temperature are released outward through the cracking of the pressure relief mechanism 213, thereby preventing the battery cell 20 from exploding.

In addition, the pressure relief mechanism 213 may be various possible pressure relief mechanisms, which is not limited in the embodiments of the present application. For example, the pressure relief mechanism 213 may be a temperature-sensitive pressure relief mechanism, the temperature-sensitive pressure relief mechanism is configured to be capable of being melted when the internal temperature of the battery cell 20 provided with the pressure relief mechanism 213 reaches a threshold; and/or the pressure relief mechanism 213 may be a pressure-sensitive pressure relief mechanism, and the pressure-sensitive pressure relief mechanism is configured to be capable of being fractured when an internal gas pressure of the battery cell 20 provided with the pressure relief mechanism 213 reaches a threshold.

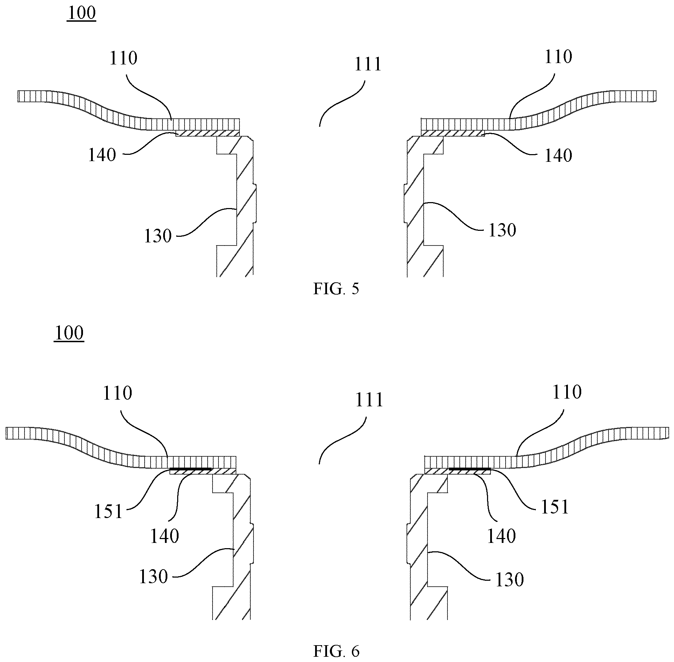

The schematic structural diagram of the battery cell 20 provided by the embodiment of the present application is described above with reference to FIG. 3. The related technical solution of a box body 100 provided by the embodiment of the present application is described below with reference to FIG. 4 and FIG. 5. FIG. 4 is a schematic exploded stereogram of a box body 100 disclosed in an embodiment of the present application; and FIG. 5 is a schematic sectional diagram taken along A-A in FIG. 4.

As shown in FIG. 4 and FIG. 5, the box body 100 includes: a first partial box body 110, provided with a first hole 111; a mounting structural member 130, located in the box body 100 and arranged corresponding to the first hole 111, where the mounting structural member 130 is used for mounting the box body 100 to a power consumption apparatus through the first hole 111; where an edge of the first hole 111 is provided with a rigid structural member 140, and the rigid structural member 140 abuts against the mounting structural member 130 to prevent the mounting structural member 130 from contacting the first partial box body 110.

Specifically, in the embodiment of the present application, the first partial box body 110 is a partial box body of the box body 100. As an example, as shown in FIG. 4, the first partial box body 110 may be a cover plate structure, and the first partial box body 110 may be one of the walls of the box body 100. Or, in another example, the first partial box body 110 may also be a hollow cuboid structure with an open surface as shown in FIG. 2. The embodiments of the present application do not limit the specific shape and size of the first partial box body 110, it only needs to be able to form a stereochemical structure with a sealing chamber together with other components of the box body 200.

In addition, the first partial box body 110 is provided with a first hole 111, and the first hole 111 is arranged corresponding to the mounting structural member 130 inside the box body 100, so that the mounting structural member 130 can mount the box body 100 to the power consumption apparatus where the battery 10 is located through the first hole 111.

Specifically, a structural member that cooperates with the mounting structural member 130 is provided in the power consumption apparatus, and any one of the mounting structural member 130 and its matching structural members can pass through the first hole 111 to realize inter connection between the two. For example, the mounting structural member 130 is a base with a threaded structure, and the power consumption apparatus is provided with bolts that cooperate with the base; or, for another example, the mounting structural member 130 is a bolt, and the power consumption apparatus is provided with a base; the bolts pass through the first hole 111 is connected to the base to realize the interconnection between the two. Certainly, in other implementations, the mounting structural member 130 and its matching structural member may also be other types of structural members, and it only needs to be able to achieve a stable connection between the two, which is not specifically limited in the embodiment of the present application.

Optionally, in some implementations, the mounting structural member 130 can be used to mount the box body 100 to a power consumption apparatus. For example, the mounting structural member 130 can be used to mount the box body 100 to the vehicle frame of the vehicle 1 to realize the fixed mounting of the battery 10 in the vehicle 1. When the box body 100 is mounted on the vehicle frame of the vehicle 1, the box body 100 is located in the frame in the direction of gravity. Of course, in other implementations, the mounting structural member 130 can also be used to implement other mounting forms of the box body 100 in the power consumption apparatus other than mounting, so as to realize the stable mounting of the box body 100 in the power consumption apparatus, which is not specifically limited in the embodiment of the present application.

As shown in FIG. 4 and FIG. 5, in the embodiment of the present application, in addition to the mounting structural member 130 in the box body 100, a rigid structural member 140 is also provided on an edge of the first hole 111 of the first partial box body 110. The rigid mechanism member 140 can be a ring-shaped structural member, and the hollow middle region in its middle corresponds to the first hole 111, and the rigid structural member 140 abuts against the part of the first partial box body 110 at the edge of the first hole 111 and the mounting structural member 130, so as to prevent the mounting structural member 130 from contacting the edge of the first partial box body 110 located at the first hole 111.

Through the technical solution of the present embodiment of the present application, the box body is 100 provided with a mounting structural member 130, and the mounting structural member 130 is arranged corresponding to a first hole 111 in the first partial box body 110, and the box body 100 can be mounted to a power consumption apparatus through the first hole 111. On such basis, the edge of the first hole 111 is also provided with a rigid structural member 140, and the rigid structural member 140 abuts against the mounting structural member 130, which can prevent the mounting structural member 130 from wearing the position at the edge of the first hole 111 in the first partial box body 110, thus preventing problems such as the rigidity and strength reduction of the first partial box body 110 caused by the wearing. By ensuring the rigidity and strength of the first partial box body 110, it is possible to prevent the movement of vehicles and other power consumption apparatus from affecting the first partial box body 110, thus improving the mounting stability of the box body 100 and the battery 10 in the power consumption apparatus, which is conducive to improving the safety performance and comprehensive performance of the battery 10 and convenient for the promotion and use of batteries 10 in power consumption apparatus.

In addition, compared with the technical solution in which the flexible structural member abuts against the mounting structural member 130 to prevent the mounting structural member 130 from contacting the first partial box body 110, the rigid structural member 140 in the embodiment of the present application has greater rigidity and strength with higher stability and reliability, and the rigid structural member 140 can more effectively withstand the force exerted by the mounting structural member 130 on it with less wearing. Meanwhile, the rigid structural member 140 is arranged between the first partial box body 110 and the mounting structural member 130, which can improve the connection strength between the first partial box body 110 and the mounting structural member 130. When the mounting structural member 130 is mounted to the power consumption apparatus through the first hole 111 of the first partial box body 110, the high connection strength between the first partial box body 110 and the mounting structural member 130 can further ensure the mounting stability of the box body 100 and the battery 10 in the power consumption apparatus.

Optionally, in the embodiment of the present application, the first partial box body 110 may be a composite material, such as: sheet molding compound (SMC), prepreg compression molding (PCM) composite material, high pressure resin transfer molding (HP-RTM) composite materials, etc. The first partial box body 100 has the characteristics of light weight and relatively high strength. While ensuring the box body 100 has a certain strength and reliability, the overall quality of the box body 100 can be reduced, to facilitate the mounting and replacement of the battery 10 in the power consumption apparatus.

In addition, optionally, in the embodiment of the present application, the rigid structural member 140 may be a metal material, for example, a steel material, a stainless steel material, an aluminum alloy material, a copper material, etc. The rigid structural member 140 may have greater wear resistance than the first partial box body 110, and have a certain degree of rigidity and strength. Therefore, metal materials can be suitably used as the rigid structural member 140 in the embodiments of the present application, so as to improve the mounting stability of the box body 100 and the battery 10 in the power consumption apparatus.

Optionally, in some implementations of the above embodiments of the application, the rigid structural member 140 may directly abut against the first partial box body 110. Specifically, the rigid structural member 140 may directly abut against the part of the first partial box body 110 at the edge of the first hole 111. However, in the embodiment, the sealing between the rigid structural member 140 and the first partial box body 110 is unsatisfying, which will affect the safety performance of electrical components such as the battery cells 20 inside the box body 100.

Therefore, optionally, in other implementations of the above-mentioned embodiment of the application, the rigid structural member 140 and the first partial box body 110 may abut against each other through the first sealing member 151 to guarantee the sealing between the rigid structural member 140 and the first partial box body 110.

FIG. 6 shows a schematic sectional diagram of another box body 100 provided in an embodiment of application.

As shown in FIG. 6, the first sealing member 151 is provided between the rigid structural member 140 and the first partial box body 110. Optionally, the first sealing member 151 may be an annular structure that is adapted to the shape of the first hole 111 in the first partial box body 110 and is provided between the rigid structural member 140 and the first partial box body 110 that is located at the edge of the first hole 111. In the implementation, the first sealing member 151 connects the rigid structural member 140 to the part of the first partial box body 110 located at the edge of the first hole 111 to ensure the sealing between the rigid structural member 140 and the first partial box body 110, thereby improving the overall sealing of the box body 100 and improving the safety of the electrical components such as the battery cells 20 inside the box body 100.

Optionally, the first sealing member 151 includes but is not limited to: structural adhesive or rubber material. In addition, the first sealing member 151 may also be any other material used to realize the sealing function in the related art, which is not specifically limited in this embodiment of the present application.

In the case that the first sealing member 151 is structural adhesive, the first sealing member 151 can not only ensure the sealing between the rigid structural member 140 and the first partial box body 110, but also realize the reliable connection between the rigid structural member 140 and the first partial box body 110 to further improve the reliability of the box body 100 as a whole. Meanwhile, the structural adhesive is also convenient to be coated on the rigid structural member 140 or the first partial box body 110, and the process is relatively simple, which is conducive to improving the manufacturing efficiency of the box body 100 and the battery 10.

Optionally, in order to ensure the strength and other mechanical properties of the first sealing member 151, the thickness of the first sealing member 151 between the rigid structural member 140 and the first partial box body 110 also needs to be controlled within an appropriate range. As an example and not a limitation, the thickness of the first sealing member 151 ranges from 0.2mm to 0.3mm, so that the first sealing member 151 can have better mechanical properties, and further ensure and optimize the reliable connection between the rigid structural member 140 and the first partial box body 110.

In the above-mentioned embodiment in FIG. 6, the sealing and even reliable connection between the rigid structural member 140 and the first partial box body 110 can be realized through the first sealing member 151. Further, the rigid structural member 140 and the mounting structural member 130 may also abut against each other through the second sealing member 152 to ensure the sealing between the rigid structural member 140 and the mounting structural member 130. Of course, in order to save costs or in a relatively sealing mounting environment, the rigid structural member 140 may also directly abut against the mounting structural member 130.

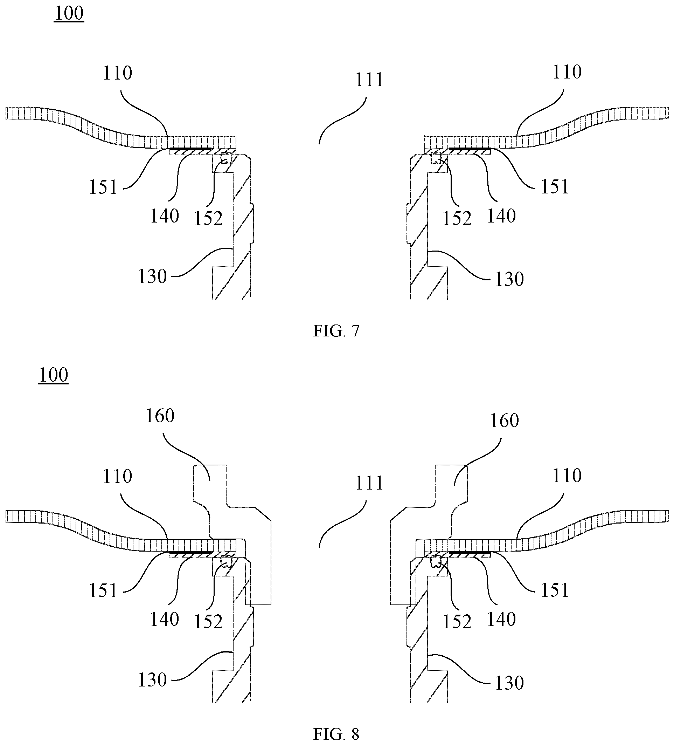

FIG. 7 shows a schematic sectional diagram of another box body 100 provided in an embodiment of application.

As shown in FIG. 7, at least part of the second sealing member 152 is arranged between the rigid structural member 140 and the mounting structural member 130. Optionally, the second sealing member 152 may be an annular structure that is adapted to the shape of the first hole 111 in the first partial box body 110 and is provided at the side of the mounting structural member 130 facing the rigid structural member 140. In the implementation, the second sealing member 152 abuts between the rigid structural member 140 and the mounting structural member 130 to ensure the sealing between the rigid structural member 140 and the mounting structural member 130, thereby improving the overall sealing of the box body 100 and improving the safety performance of electrical components such as battery cells 20 inside the box body 100.

Optionally, the second sealing member 152 includes but is not limited to: rubber material or structural adhesive. In addition, the second sealing member 152 may also be any other material used to realize the sealing function in the related art, which is not specifically limited in this embodiment of the present application.

As an example, as shown in FIG. 7, the second sealing member 152 may be a rubber material, for example, the second sealing member 152 may be a rubber ring. A groove can be formed on the side of the mounting structural member 130 facing the rigid structural member 140, and the groove can be used to accommodate the second sealing member 152 so that the second sealing member 152 can be mounted on the mounting structural member 130. It can be understood that, in the implementation, the thickness of the second sealing member 152 needs to be greater than the depth of the groove, so that at least part of the second sealing member 152 is exposed to the groove, and at least part of the second sealing member 152 can abut against the rigid structural member 130.

In the case that the second sealing member 152 is made of rubber material, while the second sealing member 152 has good sealing performance, it can also be easily mounted and provided in the mounting structural member 130, and easy to replace and maintain, thus ensuring a long-term and relatively reliable seal between the rigid structural member 140 and the mounting structural member 130 through the second sealing member 152.

In the above embodiment, the first hole 111 is formed in the first partial box body 110, the rigid structural member 140 is arranged on the edge of the first hole 111, and the mounting structural member 130 is also arranged corresponding to the first hole 111. Although the rigid structural member 140 can be directly or indirectly abutted against the mounting structural member 130, and the rigid structural member 140 can be directly or indirectly abutted against the first partial box body 110, but there is a lack of reliable and firm interconnection between the three, or in other words, a more reliable and firm interconnection can be further realized among the three. Therefore, in the embodiment of the present application, the box body 100 further includes a fixing member 160 for fixing the first partial box body 110 and the rigid structural member 140 to the mounting structural member 130 so as to realize reliable connection of the three.

FIG. 8 shows a schematic sectional diagram of another box body 100 provided in an embodiment of application.

As shown in FIG. 8, in the embodiment of the present application, the box body 100 further includes: a fixing member 160, located outside the box body 100 and connected to the mounting structural member 130 through the first hole 111, and the fixing member 160 is used for fixing the first partial box body 110 and the rigid structural member 140 to the mounting structural member 130.

Specifically, as shown in FIG. 8, the fixing member 160 can be located on the side of the first partial box body 110 facing the outer portion of the box body 100, and the fixing member 160 can pass through the first hole 111 from the outer portion of the box body 100 to the first partial box body 110. The first partial box body 110 and the rigid structural member 140 are fixed to the mounting structural member 130 to realize a reliable connection among the first partial box body 110, the rigid structural member 140 and the mounting structural member 130.

As an example and not limitation, as shown in FIG. 8, the fixing member 160 can be a screw structure with a flange at one end, the flange is attached to the first partial box body 110 from the outer portion of the box body 100, and the screw is inserted in the mounting structural member 130 through the first hole 111, both of them can have a thread structure that cooperates with each other to realize the fixed connection of the two. Meanwhile, the flange acts on the first partial box body 110 and the rigid structural member 140 so that the first partial box body 110 and the rigid structural member 140 can be tightly attached to the mounting structural member 130.

Optionally, as shown in FIG. 8, a space may be reserved in the fixing member 160, and the space communicates with the internal space of the mounting structural member 130, so that the structural members in the power consumption apparatus can enter the space and realize the interconnection with the structural member 130.

In the embodiment shown in FIG. 8, the fixing member 160 directly abuts against the first partial box body 110. During the movement of the power consumption apparatus, the vibration of the structural members in the power consumption apparatus will drive the mounting structural member 130 and the fixing member 160 to vibrate, so that the fixing member 160 causes wearing to the first partial box body 110.

In view of this, in the embodiment of the present application, the rigid structural member 140, in addition to abutting against the mounting structural member 130, also abuts against the fixing member 160 to prevent the fixing member 160 from contacting the first partial box body 110, thus preventing the fixing member 160 from wearing the first partial box body 110.

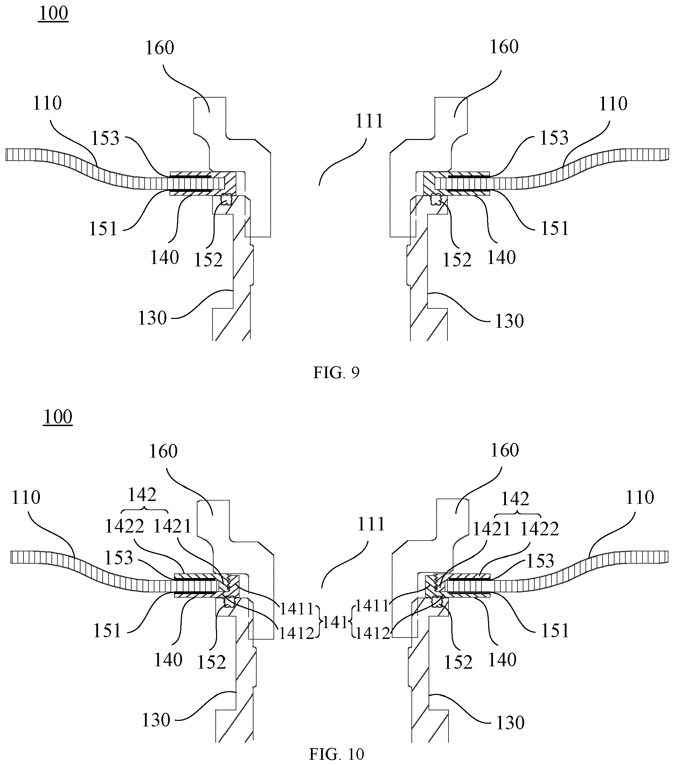

FIG. 9 shows a schematic sectional diagram of another box body 100 provided in an embodiment of application.

As shown in FIG. 9, in the embodiment of the present application, the rigid structural member 140 can cover the side wall of the first hole 111 of the first partial box body 110 and surfaces that locate at edges of the first partial box body 110 at the first hole 111 and face an inner portion and an outer portion of the box body 100.

Specifically, in the embodiment of the present application, the first part of the rigid structural member 140 can cover the surface of the first partial box body 110 located at the edge of the first hole 111 and facing the inner portion of the box body 100, and the first part of the rigid structural member can be directly or indirectly abutted against the first partial box body 110 and the mounting structural member 130 to prevent the mounting structural member 130 from wearing the first partial box body 110.

In addition, in the embodiment of the present application, the second part of the rigid structural member 140 can cover the surface of the second partial box body 110 located at the edge of the first hole 111 and facing the outer portion of the box body 100, and the outside the second part of the rigid structural member can be directly or indirectly abutted against the first partial box body 110 and the fixing member 160 to prevent the fixing member 160 from wearing the first partial box body 110.

Furthermore, the third part of the rigid structural member 140 can cover the side wall of the first hole 111 in the first partial box body 110, and the third part of the rigid structural member can be used to connect the first part of the rigid structural member and the second part of the rigid structural member, so that the entire rigid structural part 140 can be more stably disposed on the edge of the first hole 111, forming a reliable and stable connection with the first partial box body 110. In addition, the third part of the rigid structural member is arranged between the fixing member 160 and the mounting structural member 130, which can provide a rigid connection between the fixing member 160 and the mounting structural member 130, and bear the tightening force between the fixing member 160 and the mounting structural member 130, so as to ensure that there will be no looseness between the fixing member 160 and the mounting structural member 130. Through the arrangement of the third part of the rigid structural member, the interconnection between the first partial box body 110, the rigid structural member 140 and the mounting structural member 130 can be made more stable, thereby improving the mounting stability of the box body 100 mounted to the power consumption apparatus through the mounting structural member 130.

Optionally, as shown in FIG. 9, in the rigid structural member 140, a first sealing member 151 may be provided between the first part of the rigid structural member and the surface of the first partial box body 110 facing the inner portion of the box body 100, and/or a filling layer 153 may be provided between the second part of the rigid structural member and the surface of the first partial box body 110 facing the outer portion of the box body 100. Wherein, the first sealing member 151 is used for ensuring the sealing between the first partial rigid structural member and the surface of the first partial box body 110 facing the inner portion of the box body 100. The filling layer 153 can firstly be used for absorbing manufacturing tolerances of the rigid structural member 140 and the first partial box body 110, so as to avoid the gap formed between the rigid structural member 140 and the first partial box body 110 due to the influence of the manufacturing process, thereby improving the overall sealing performance of the box body 100 and other related performances. Secondly, the filling layer 153 can be a structural adhesive layer. In addition to being used for sealing, the structural adhesive layer can also be used to realize the connection between the second part of the rigid structural member and the first partial box body 110, so as to further improve the mounting stability of the rigid structural member 140 on the first partial box body 110. Of course, the filling layer 153 may be other filling materials, such as rubber, foam, etc., in addition to the structural adhesive layer, and the embodiment of the present application does not specifically limit the specific filling materials.

Optionally, in addition to the three-part structural member described above, the rigid structural member 140 may also omit the third part in the rigid structural member 140 in other embodiments, that is, the rigid structural member 140 includes the first part and the second part that are separated from each other, and the first part and the second part can be adhered to the surface of the first partial box body 110 at the edge of the hole 111 and facing the inner portion and the outer portion of the box body 100 by structural adhesive, respectively. In this embodiment, although the mounting stability of the rigid structural member 140 on the first partial box body 110 is slightly poor, the amount of the rigid structural member 140 can be reduced, reducing the overall manufacturing cost of the rigid structural member 140 and the box body 100.

As for the rigid structural member 140 shown in FIG. 9, optionally, in some implementations, the rigid structural member 140 may consist of two rigid sleeves provided to connect to each other, thereby facilitating the mounting of the rigid structural member 140 at the edge of the first hole 111 in the first partial box body 110.

FIG. 10 shows a schematic sectional diagram of another box body 100 provided in an embodiment of application.

As shown in FIG. 10, in the embodiment of the present application, the rigid structural member 140 includes a first rigid sleeve 141 and a second rigid sleeve 142, the first rigid sleeve 141 includes a first tubular structure 1411 and a first flange structure 1412, the first tubular structure is located on the side wall of the first hole 111, the first flange structure 1412 covers a surface that locates at the edge of the first partial box body 110 at the first hole 111 and faces the inner portion of the box body 100. The second rigid sleeve 142 includes a second tubular structure 1421 and a second flange structure 1422, the second tubular structure 1421 is located at the side wall of first hole 111 and is mated and connected first tubular structure 1411, and the second flange structure 1422 covers a surface that locates at the edge of the first partial box body 110 at first hole 111 and faces the outer portion of the box body 110.

Specifically, for the first tubular structure 1411 of the first rigid sleeve 141 and the second tubular structure 1421 of the second rigid sleeve 142, the shape and size of the two in the radial direction can be adapted to the shape and size of the first hole 111 in the first partial box body 110. For example, the size of the two in the radial direction may be slightly smaller than the diameter of the first hole 111, so that the two can be mounted in the first hole 111 and located at the side wall of the first hole 111. In addition, the sizes of the first tubular structure 1411 and the second tubular structure 1421 in the axial direction can be adapted to the thickness of the first partial box body 110. For example, the sizes of the first tubular structure 1411 and the second tubular structure 1421 in the axial direction can be slightly greater than the thickness of the first partial box body 110.

In addition, the first flange structure 1412 is connected to the first tubular structure 1411, is located at one end of the first tubular structure 1411 toward the inner portion of the box body 100, and extends along the surface of the first partial box body 110 toward the inner portion of the box body 100. The first flange structure 1412 may directly abut against the surface of the first partial box body 110 that is located at the edge of the first hole 111 and faces the inner portion of the box body 100, or, as shown in FIG. 10, the first flange structure 1412 may abut against the first partial box body 110 through the first sealing member 151, specifically, the first flange structure 1412 abuts against a surface located at the edge of the first hole 111 and facing the inner portion of the box body 100 through the first sealing member 151. In addition, when the first flange structure 1412 is abutted against the first partial box body 110, the first flange structure 1412 can also be abutted against the mounting structural member 130. Specifically, the first flange structure 1412 may also directly abut against the mounting structural member 130, or, the first flange structure 1412 may also abut against the mounting structural member 130 through the second sealing member 152.

In the implementation, as shown in FIG. 10, the width of the first sealing member 151 located between the first flange structure 1412 and the first partial box body 110 may substantially cover the width of the first flange structure 1412. Wherein, the width of the first sealing member 151 and the first flange structure 1412 can be understood as the size of the first sealing member 151 and the first flange structure 1412 in the first direction, and the first direction is parallel to the radial direction of the first hole 111, or in other words, the first direction is parallel to the radial direction of the first tubular structure 1411.

Through the implementation, the space of the first flange structure 1412 can be used to a large extent to arrange enough first sealing members 151 to realize more reliable sealing and connection between the first flange structure and 1412 the first partial box body 110.

As an example but not a limitation, the width of the first sealing member 151 may be greater than or equal to 15 mm, so as to ensure a relatively reliable sealing and connection between the first flange structure 1412 and the first partial box body 110.

In addition, as mentioned above, the thickness of the first sealing member 151 may range from 0.2mm to 0.3mm, so that the first sealing member 151 can have better mechanical properties, so as to ensure and optimize the reliable connection between the first rigid sleeve 141 and the first partial box body 110.

With continuous reference to FIG. 10, the second flange structure 1422 is connected to the second tubular structure 1421, and located at one end of the first tubular structure 1421 toward the outer portion of the box body 100, and extends along the surface of the first partial box body 110 toward the outer portion of the box body 100. The second flange structure 1422 may directly abut against the surface of the first partial box body 110 located at the edge of the first hole 111 and facing the outer portion of the box body 100, or, as shown in FIG. 10, the second flange structure 1422 may abut against the surface of the first partial box body 110 located at the edge of the first hole 111 and facing the outer portion of the box body 100 through the filling layer 153, in other words, the filling layer 153 is provided between the second flange structure 1422 and the surface that locates at the edge of the first partial box body 110 at the first hole 111 and faces the outer portion of the box body 100.

In combination with the above, in the embodiment of the present application, the filling layer 153 can firstly be used for absorbing the manufacturing tolerances of the first rigid sleeve 141, the second rigid sleeve 142 and the first partial box body 110, so as to avoid the gap formed between the first rigid sleeve 141, the second rigid sleeve 142 and the first partial box body 110 due to the influence of the manufacturing process, thereby improving the overall sealing performance of the box body 100 and other related performances. Secondly, the filling layer 153 can be a structural adhesive layer. In addition to being used for sealing, the structural adhesive layer can also be used to realize the connection between the second rigid sleeve 142 and the first partial box body 110, so as to further improve the mounting stability of the rigid structural member 140 on the first partial box body 110.

Optionally, the thickness of the filling layer 153 between the second flange structure 1422 and the first partial box body 110 can be greater than the thickness of the first sealing member 151, allowing a greater thickness of the filling layer 153, thus being able to be fully absorb the manufacturing tolerances of the first rigid sleeve 141, the second rigid sleeve 142 and the first partial box body 110, and ensuring the performance of the box body 100.

Optionally, as shown in FIG. 10, in some embodiments, the second tubular structure 1421 covers at least part of the side wall of the first hole 111, and the first tubular structure 1411 covers at least part of the second tubular structure 1421.

In the implementation, on the basis of realizing that the first tubular structure 1411 and the second tubular structure 1421 are connected to each other and arranged on the side wall of the first hole 111, compared with the second tubular structure 1421, the first tubular structure 1411 is provided farther away from the side wall of the first hole 111, and the length of the first flange structure 1412 connected to the first tubular structure 1411 in the radial direction is longer, so that the area of the first flange structure 1412 and the connection area between the first flange structure 1412 and the mounting structural member 130 can be increased, thus ensuring the reliability of the connection between the first rigid sleeve 141 and the mounting structural member 130. In addition, in the implementation, the second sealing member 152 can be conveniently arranged between the first flange structure 1412 and the mounting structural member 130, and the contact area between the second sealing member 152 and the first flange structure 1412 and the mounting structure 130 can also be improved, thereby improving the sealing performance of the second sealing member 152 between the first flange structure 1412 and the mounting structural member 130. Furthermore, in the present implementation, firstly, the first rigid sleeve 141 can be provided on the first hole 111, where the first tubular structure 1411 can cover at least part of the side wall of the first hole 111, and then, the second rigid sleeve 142 is interconnected with the first rigid sleeve 141, and the mounting process between the two is relatively simple, and can fit well with the first hole 111.

In addition to the way of arrangement of the first tubular structure 1411 and the second tubular structure 1421 as shown in FIG. 10, in other implementation, the first tubular structure 1411 wraps at least part of the side wall of the first hole 111, and the second tubular structure 1421 wraps at least part of the first tubular structure 1411, and the mutual interaction and connection between the first tubular structure 1411 and the second tubular structure 1421 can also be realized and arranged on the side wall of the first hole 111.

As an example but not a limitation, as shown in FIG. 10, the first tubular structure 1411 and the second tubular structure 1421 are provided to be mated and connected to each other through threads. The implementation has a simple process and is easy to implement, and can ensure a stable and reliable connection between the first rigid sleeve 141 and the second rigid sleeve 142.

Of course, the first tubular structure 1411 and the second tubular structure 1421 can also be connected to each other through other mechanical connection methods in the related art in addition to being connected with each other through threads, for example, through structural adhesive, buckle, concave-convex fit, etc. To realize the interconnection between the first tubular structure 1411 and the second tubular structure 1421, the embodiment of the present application does not specifically limit the specific mechanical connection manner.

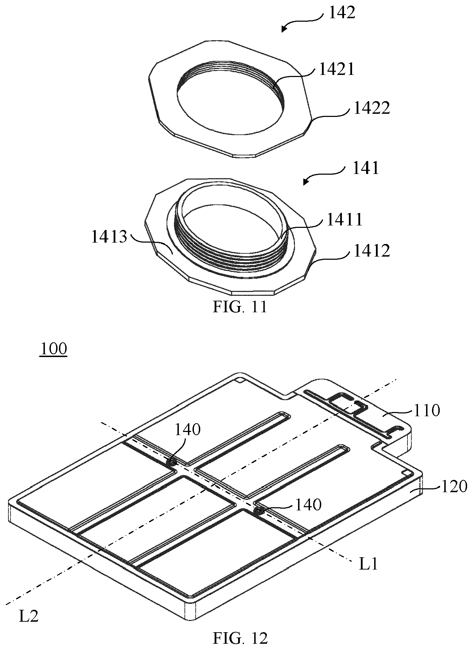

FIG. 11 shows a schematic stereogram of the above first rigid sleeve 141 and a second rigid sleeve 142.

As shown in FIG. 11, in order to realize the first tubular structure 1411 covering at least part of the second tubular structure 1421 and the fitting connection between the two, the first tubular structure 1411 of the first rigid sleeve 141 is provided with external threads, correspondingly, the second tubular structure 1421 of the second rigid sleeves 142 is provided with internal threads, so that the two can be mated and connected with each other.

In addition, as shown in FIG. 11, a spacing step 1413 is provided on the first flange structure 1412 of the first rigid sleeve 141, and the spacing step 1413 is used for accommodating the above-mentioned first sealing member 151.

Specifically, in the implementation, the height of the spacing step 1413 can be controlled within a certain range, so that the thickness of the first sealing member 151 accommodated in the spacing step 1413 can also be controlled within a certain range, for example, within 0.2 mm to 0.3 mm, so as to ensure that the first sealing member 151 has better mechanical properties.

In addition, the width of the spacing step 1413 can also basically cover the width of the first flange structure 1412, so as to utilize the space of the first flange structure 1412 to a large extent, so that the width of the first sealing member 151 accommodated in the spacing step 1413 is wider, thus ensuring the first sealing member 151 a better sealing performance.

Through the technical solution of the embodiment, a spacing step 1413 is provided on the first flange structure 1412 of the first rigid sleeve 141, so as to control the size of the first sealing member 151 accommodated in the spacing step 1413. The implementation is relatively simple and easy to implement, and can also enable the first sealing member 151 to have good performance, thus improving the overall manufacturing efficiency and performance of the box body 100.

With continuous reference to FIG. 11, the shapes of the first flange structure 1412 of the first rigid sleeve 141 and the second flange structure 1422 of the second rigid sleeve 142 are polygons. The polygonal first flange structure 1412 and the second flange structure 1422 can provide a locking structure for the mounting tool for the first rigid sleeve 141 and the second rigid sleeve 142, so that the mounting tool can be locked on the first flange structure 1412 and the second flange structure 1422, and realize the mutual connection and mounting between the first rigid sleeve 141 and the second rigid sleeve 142.

Specifically, after the mounting tool is locked on the first flange structure 1412 and/or the second flange structure 1422, the first flange structure 1412 and/or the second flange structure 1422 are rotated through the rotation of the mounting tool to drive the first tubular structure 1411 and the second tubular structure 1422 to rotate, so that the first tubular structure 1411 and the second tubular structure 1422 are connected to each other by threads, so as to realize the mutual connection and mounting between the first rigid sleeve 141 and the second rigid sleeve 142.

Optionally, the shape of the first flange structure 1412 is different from the shape of the second flange structure 1422. For example, the shape of the first flange structure 1412 is a polygon with N straight sides, and the shape of the second flange structure 1422 is a polygon with M sides, where M and N are two unequal positive integers. Or, in the case where M and N are equal, the shapes of the two polygons are different. As an example and not a limitation, in the embodiment shown in FIG. 11, the shapes of the first flange structure 1412 and the second flange structure 1422 are both dodecagonal, but the shape of the first flange structure 1412 is a regular dodecagon, while the shape of the second flange structure 1422 is an irregular dodecagon.

Through the technical solution of the embodiment, the shape of the first flange structure 1412 is different from the shape of the second flange structure 1422, which can play a role in error prevention, that is, the first rigid sleeve 141 and the second rigid sleeve 142 can be distinguished from the shapes of the first flange structure 1412 and the second flange structure 1422, which is conducive to facilitating the correct mounting of the first rigid sleeve 141 and the second rigid sleeve 142 on the first partial box body 110.

Optionally, in the above-mentioned embodiments, the first hole 111 may be provided in the middle region of the first partial box body 110. Correspondingly, in the present implementation, the rigid structural member 140 and the mounting structural member 130 are also correspondingly located in the middle region of the box body 100. The mounting structural member 130 and the rigid structural member 140 located in the middle region of the box body 100 can be used to mount the box body 100 and the battery 10 located therein to the power consumption apparatus in a more balanced and stable manner.

Optionally, one or more rigid structural members 140 may be included in the box body 100. In the case that the box body 100 includes a plurality of rigid structural members 140, the mounting stability of the box body 100 and the battery 10 therein in the power consumption apparatus can be further improved.

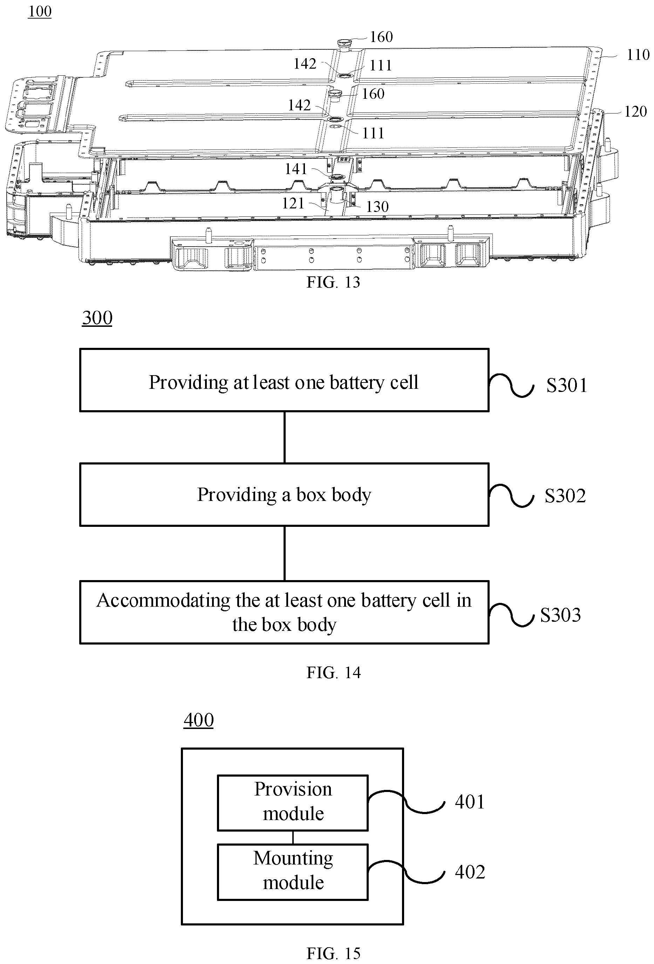

FIG. 12 shows a schematic structural stereogram of a box body 100 provided in an embodiment of the present application. FIG. 13 shows a schematic exploded stereogram of the box body 100 in the embodiment of shown in FIG. 12.

As shown in FIG. 12, in the embodiment of the present application, the box body 100 includes two rigid structural members 140, and the two rigid structural members 140 may be distributed in the middle region of the first partial box body 110.

Optionally, the first partial box body 110 can be approximately regarded as a plate-like structure, and the two rigid structural members 140 can be located on the central axis L1 of the first partial box body 110 in the length direction, symmetrically arranged with respect to the central axis L2 of the first partial box body 110 in the width direction.

Optionally, in other embodiments, the two rigid structural members 140 are arranged symmetrically with respect to the central axis L1 of the first partial box body 110 in the length direction, or symmetrically arranged with respect to the diagonal line of the first partial box body 110. Through the above-mentioned embodiments, the box body 100 and the battery 10 therein can be more balanced and stably mounted on the power consumption apparatus.

Optionally, with continuous reference to FIG. 12 and FIG. 13, in the example of the present application, the box body 100 may further include a second partial box body 120, and the second partial box body 120 may be interlocked with the above-mentioned first partial box body 110 to form an accommodating chamber for accommodating the battery cell 20.

Specifically, the second partial box body 120 can be a hollow cuboid structure with an opening, and its size can cooperate with the first partial box body 110 to form a closed accommodating chamber, ensuring the overall performance of the battery cells 20 located in the accommodating chamber and other related structural components.

Optionally, as shown in FIG. 13, a beam 121 may be provided in the second partial box body 120, and the beam 121 may be used to separate the plurality of battery cells 20 from each other, and improve the mounting stability of the plurality of battery cells 20 in the box body 100.

In some embodiments, the above-mentioned mounting structural member 130 can be provided on the beam 121. For example, the mounting structural member 130 can be provided on the surface of the beam 121 opposite to the first partial box body 110, so that the mounting structural member 130 corresponds to the first hole 111 in the first partial box body 110.

Through the technical solution of the embodiment, the beam 121 in the second partial box body 120 is used to provide the mounting structural member 130. On the one hand, other spaces in the box body 100 for accommodating battery cells 20 will not be occupied, and the energy density of the battery 10 will be improved; and on the other hand, the mounting stability of the beam 121 in the box body 100 is relatively high. Therefore, arranging the mounting structural member 130 on the beam 121 can also improve the mounting stability of the mounting structural member 130 in the box body 100.

In addition, as shown in FIG. 13, in the embodiment of the present application, the rigid structural member 140 may be the rigid structural member 140 shown in FIGS. 10 to 11, that is, includes a first rigid sleeve 141 and a second rigid sleeve 142. The second rigid sleeve 142 and the first rigid sleeve 141 cover up and down the region of the first partial box body 110 located at the edge of the first hole 111. In addition, the first rigid sleeve 141 and the second rigid sleeve 142 can be mounted and fixed at the position of the first hole 111 through threaded connection.

Further, in the embodiment shown in FIG. 13, the first rigid sleeve 141 and the second rigid sleeve 142 are arranged corresponding to the mounting structural member 130 and the fixing member 160. The fixing member 160 can be fixed to the mounting structural member 130 passing through the first rigid sleeve 141 and the second rigid sleeve 142. The first rigid sleeve 141 and the second rigid sleeve 142 bear the tightening force between the fixing member 160 and the mounting structural member 130, so as to ensure the hard connection here, and improving the mounting stability of the box body 100 in the power consumption apparatus. Meanwhile, the first rigid sleeve 141 and the second rigid sleeve 142 can also prevent the fixing member 160 and the mounting structural member 130 from wearing the first partial box body 110, and improve the overall service life and reliability of the box body 100.

It should be noted that, in the embodiment shown in FIG. 13, the first sealing member 151 may be provided between the first rigid sleeve 141 and the first partial box body 110, and the second sealing member 152 may be provided between the first rigid sleeve 141 and the mounting structural member 130, the filling layer 153 may be provided between the second rigid sleeve 142 and the first partial box body 110. For the specific arrangement and related functions of the first sealing member 151, the second sealing member 152 and the filling layer 153, please refer to the relevant description in the above embodiments, and details will not be repeated here.

An embodiment of the present application also provides a battery 10, the battery 10 may include: at least one battery cell 20 and the box body 100 in the foregoing embodiments, the box body 100 is used to accommodate the at least one battery cell 20.

An embodiment of the present application also provides a power consumption apparatus, which may include the battery 10 in the foregoing embodiments, and the battery 10 is used to provide electric energy to the power consumption apparatus.

Optionally, the power consumption apparatus may be a vehicle 1, a ship or a spacecraft.

The box body 100 for a battery, the battery 10 and the power consumption apparatus according to the embodiments of the present application are described above, and a method and apparatus for preparing a battery according to the embodiments of the present application will be described below. For the parts not described in detail, reference can be made to the foregoing embodiments.

FIG. 14 shows a schematic flowchart of a method 300 for producing a battery according to an embodiment of the present application. As shown in FIG. 14, the method 300 may include the following steps:
S301: providing at least one battery cell 20; and
S302: providing a box body 100.

Specifically, the box body 100 includes: a first partial box body 110, provided with a first hole 111; a mounting structural member 130, located in the box body 100 and arranged corresponding to the first hole 111, where the mounting structural member 130 is used for mounting the box body 100 to a power consumption apparatus through the first hole 111; where an edge of the first hole 111 is provided with a rigid structural member 140, and the rigid structural member 140 abuts against the mounting structural member 130 to prevent the mounting structural member 130 from contacting the first partial box body 110.

S303: accommodating at least one battery cell 20 in the box body 100.

FIG. 15 shows a schematic block diagram of an apparatus 400 for preparing a battery disclosed in an embodiment of the present application. As shown in FIG. 15, the apparatus 400 for producing a battery may include: a provision module 401 and a mounting module 402.

Specifically, the provision module 401 is used for providing at least one battery cell 20 and a box body 100.

The box body 100 includes: a first partial box body 110, provided with a first hole 111; a mounting structural member 130, located in the box body 100 and arranged corresponding to the first hole 111, where the mounting structural member 130 is used for mounting the box body 100 to a power consumption apparatus through the first hole 111; where an edge of the first hole 111 is provided with a rigid structural member 140, and the rigid structural member 140 abuts against the mounting structural member 130 to prevent the mounting structural member 130 from contacting the first partial box body 110.

The mounting module 402 is used for accommodating least one battery cell 20 in the box body 100.

Although the present application is already described with reference to the preferred embodiments, various improvements may be made to the present application and the components therein may be replaced with equivalents without departing from the scope of the present application. In particular, as long as there is no structural conflict, various technical features mentioned in the various embodiments may be combined in any manner. The present application is not limited to the specific embodiments disclosed herein, and the present application includes all technical solutions falling within the scope of the claims.

## Claims

1. A box body (100) for a battery, comprising:
a first partial box body (110), provided with a first hole (111);
a mounting structural member (130), located in the box body (100) and arranged corresponding to the first hole (111), wherein the mounting structural member (130) is used for mounting the box body (100) to a power consumption apparatus through the first hole (111);
wherein an edge of the first hole (111) is provided with a rigid structural member (140), and the rigid structural member (140) abuts against the mounting structural member (130) to prevent the mounting structural member (130) from contacting the first partial box body (110).

2. The box body (100) according to claim 1, wherein the rigid structural member (140) and the first partial box body (110) abut against each other through a first sealing member (151) to guarantee the sealing between the rigid structural member (140) and the first partial box body (110).

3. The box body (100) according to claim 1 or 2, wherein the rigid structural member (140) and the mounting structural member (130) abut against each other through a second sealing member (152) to guarantee the sealing between the rigid structural member (140) and the mounting structural member (130).

4. The box body (100) according to any one of claims 1 to 3, wherein the box body (100) further comprises a fixing member (160) located outside the box body (100) and connected to the mounting structural member (130) through the first hole (111), and the fixing member (160) is used for fixing the first partial box body (110) and the rigid structural member (140) to the mounting structural member (130).

5. The box body (100) according to claim 4, wherein the rigid structural member (140) abuts against the fixing member (160) to prevent the fixing member (160) from contacting the first partial box body (110).

6. The box body (100) according to any one of claims 1 to 5, wherein the rigid structural member (140) covers a side wall of the first hole (111) and surfaces that locate at edges of the first partial box body (110) at the first hole (111) and face an inner portion and an outer portion of the box body (100).

7. The box body (100) according to any one of claims 1 to 6, wherein the rigid structural member (140) comprises a first rigid sleeve (141) and a second rigid sleeve (142), the first rigid sleeve (141) comprises a first tubular structure (1411) and a first flange structure (1412), the first tubular structure (1411) is located on the side wall of the first hole (111), the first flange structure (1412) covers a surface that locates at the edge of the first partial box body (110) at the first hole (111) and faces the inner portion of the box body (100); and
the second rigid sleeve (142) comprises a second tubular structure (1421) and a second flange structure (1422), the second tubular structure (1421) is located at the side wall of the first hole (111) and is mated and connected to the first rigid sleeve (141) the first tubular structure (1411), and the second flange structure (1422) covers a surface that locates at the edge of the first partial box body (110) at the first hole (111) and faces the outer portion of the box body (100).

8. The box body (100) according to claim 7, wherein the second tubular structure (1421) covers at least part of the side wall of the first hole (111), and the first tubular structure (1411) covers at least part of the second tubular structure (1421).

9. The box body (100) according to claim 7 or 8, wherein the first tubular structure (1411) and the second tubular structure (1421) are mated and connected to each other through threads.

10. The box body (100) according to any one of claims 7 to 9, wherein the first flange structure (1412) and the first partial box body (110) abut against each other through the first sealing member (151), the width of the first sealing member (151) substantially covers the width of the first flange structure (1412), and/or, the thickness of the first sealing member (151) ranges from 0.2 mm to 0.3mm.

11. The box body (100) according to claim 10, wherein the first flange structure (1412) is provided with a spacing step for accommodating the first sealing member (151).

12. The box body (100) according to claim 10 or 11, wherein the first sealing member (151) is a structural adhesive.

13. The box body (100) according to any one of claims 7 to 12, wherein a filling layer (153) is provided between the second flange structure (1422) and the surface that locates at the edge of the first partial box body (110) at the first hole (111) and faces the outer portion of the box body (100).

14. The box body (100) according to any one of claims 7 to 13, wherein the shapes of the first flange structure (1412) and the second flange structure (1422) are polygons.

15. The box body (100) according to claim 14, wherein the shape of the first flange structure (1412) is different from the shape of the second flange structure (1422).

16. The box body (100) according to any one of claims 1 to 14, wherein the first hole (111) is located in a middle region of the first partial box body (110).

17. The box body (100) according to any one of claims 1 to 16, wherein the first partial box body (110) is made of a composite material, and the rigid structural member (140) is made of a metal material.

18. The box body (100) according to any one of claims 1 to 17, wherein the box body (100) further comprises a second partial box body (120) and a beam (121), the second partial box body (120) and the first partial box body (110) are interlocked to form an accommodating chamber for accommodating a battery cell (20), and the beam (121) is provided in the second partial box body (120), and the mounting structure member (130) is arranged on the beam (121).

19. A battery (10), comprising: at least one battery cell (20), and
the box body (100) according to any one of claims 1 to 18, wherein the box body (100) is used for accommodating the at least one battery cell (20).

20. A power consumption apparatus, comprising the battery (10) according to claim 19, wherein the battery (10) is used for providing electric energy to the power consumption apparatus.

21. A method (300) for preparing a battery, comprising:
providing (S301) at least one battery cell (20);
providing (S302) a box body, the box body (100) comprising:
a first partial box body (110), provided with a first hole (111);
a mounting structural member (130), located in the box body (100) and arranged corresponding to the first hole (111), wherein the mounting structural member (130) is used for mounting the box body (100) to a power consumption apparatus through the first hole (111);
wherein an edge of the first hole (111) is provided with a rigid structural member (140), and the rigid structural member (140) abuts against the mounting structural member (130) to prevent the mounting structural member (130) from contacting the first partial box body (110); and
accommodating (S303) the at least one battery cell (20) in the box body (100).

22. An apparatus (400) for preparing a battery, the apparatus comprising:
a provision module (401), used for providing at least one battery cell (20) and a box body;
wherein the box body (100) comprises:
a first partial box body (110), provided with a first hole (111);
a mounting structural member (130), located in the box body (100) and arranged corresponding to the first hole (111), wherein the mounting structural member (130) is used for mounting the box body (100) to a power consumption apparatus through the first hole (111);
wherein an edge of the first hole (111) is provided with a rigid structural member (140), and the rigid structural member (140) abuts against the mounting structural member (130) to prevent the mounting structural member (130) from contacting the first partial box body (110); and
a mounting module (402), used for accommodating the at least one battery cell (20) in the box body (100).
